**Europäisches Patentamt**

**European Patent Office**

**Office européen des brevets**

(19)

(11) **EP 1 400 785 A2**

(12) **EUROPÄISCHE PATENTANMELDUNG**

(43) Veröffentlichungstag:
**24.03.2004 Patentblatt 2004/13**

(51) Int Cl.[7]: **G01D 5/244**

(21) Anmeldenummer: **03015716.8**

(22) Anmeldetag: **10.07.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **17.09.2002 DE 10243004**

(71) Anmelder: **ROBERT BOSCH GMBH**
**70442 Stuttgart (DE)**

(72) Erfinder:
- **Rupp, Ingolf**
**70806 Kornwestheim (DE)**
- **Lehner, Michael**
**75417 Muehlacker (DE)**
- **Pietsch, Elmar**
**70806 Kornwestheim (DE)**
- **Wawczyniak, Bernd**
**71665 Vaihingen/Enz (DE)**

(54) **Verfahren zur Korrektur des Messfehlers eines Gebers**

(57) Es wird ein Verfahren zur Korrektur des Messfehlers eines Gebers vorgeschlagen, wobei sich der Messfehler aus einem bekannt systematischen Fehler, einem unbekannt systematischen Fehler und einem zufälligen Fehler zusammensetzt.

Erfindungsgemäß sollen der bekannt systematische Fehler und der unbekannt systematische Fehler unabhängig voneinander bestimmt und korrigiert werden.

Fig. 1

EP 1 400 785 A2

**Beschreibung**

Stand der Technik

Die Erfindung betrifft ein Verfahren zur Korrektur des Messfehlers eines Gebers, wobei sich der Messfehler aus einem bekannt systematischen Fehler, einem unbekannt systematischen Fehler und einem zufälligen Fehler zusammensetzt.

Grundsätzlich lässt sich ein derartiges Verfahren auf Messungen bzw. Geber aller Art anwenden. Dabei ist zu berücksichtigen, dass die Ursachen für den bekannt systematischen Fehler und den unbekannt systematischen Fehler sowie deren Ausmaß wesentlich von der Art des Gebers und der jeweiligen Anwendung abhängen. Am Beispiel eines Absolutwinkelgebers, mit dem die Winkelstellung der Nockenwelle einer Brennkraftmaschine bestimmt werden soll, werden nachfolgend die Randbedingungen und Möglichkeiten eines Verfahrens der eingangs genannten Art sowie die damit verbundenen Probleme erläutert.

Um den Anforderungen an die Funktionalität moderner Motorsteuerungen gerecht zu werden, müssen Informationen über das aktuelle Arbeitsspiel des Motors gewonnen werden. Hierfür werden die Drehzahl und die Winkelstellung der Kurbelwelle und der Nockenwelle ermittelt. Die Kurbelwellendrehzahl und -stellung werden in der Regel mit Hilfe eines Geberrades ermittelt, das mit der Kurbelwelle verbunden ist. An diesem Geberrad sind 60-2 Zähne ausgebildet, die von einem Geber beispielsweise induktiv, magnetoresistiv oder mittels Halleffekt abgetastet werden. Zur Ermittlung der Nockenwellenstellung kann ein Absolutwinkelgeber eingesetzt werden, wie er beispielsweise in der deutschen Offenlegungsschrift 197 22 016 beschrieben wird.

Mit Hilfe des Absolutwinkelgebers sollte sich die aktuelle Nockenwellenstellung mit einer Genauigkeit von 1° bis 2° erfassen lassen, damit die darauf aufbauenden Steuergerätefunktionen zuverlässig ausgeführt werden können. Diese Anforderung ist aber aufgrund einer Reihe von Randbedingungen nur schwer zu erfüllen, wie z.B.

-	mechanische Einbautoleranzen des Absolutwinkelgebers
-	mechanische Einbautoleranzen des Magneten
-	Inhomogenität des Magnetfeldes
-	Exzentrizität der Nockenwelle
-	Elektrische und mechanische Toleranzen innerhalb des Sensorelements
-	etc.

Die Gesamtheit dieser Randbedingungen verursacht den bekannt systematischen Fehler und den unbekannt systematischen Fehler, mit dem die Messwerte des Absolutwinkelgebers behaftet sind. Der zufällige Fehler entsteht - wie der Name schon sagt - rein zufällig, also unabhängig von den Randbedingungen. Deshalb ist die Korrektur des zufälligen Fehlers generell nicht möglich.

In der deutschen Offenlegungsschrift 199 27 191 wird ein Verfahren zur Korrektur des Winkelfehlers eines Absolutwinkelgebers beschrieben, mit dem die Winkelstellung der Nockenwelle einer Brennkraftmaschine erfasst wird. Das bekannte Verfahren basiert darauf, dass die Drehbewegung der Nockenwelle mit der Drehbewegung der Kurbelwelle eindeutig verknüpft ist, so dass sich die Nockenwellenstellung theoretisch auch rein rechnerisch, an Hand der erfassten Kurbelwellenstellung ermitteln lässt. Entsprechend dem bekannten Verfahren werden zunächst Korrekturwerte bzw. eine Korrekturkennlinie ermittelt, mit deren Hilfe das Ausgangssignal des Absolutwinkelgebers dann korrigiert wird. Zur Ermittlung eines Korrekturwerts werden jeweils ein Messwert des Absolutwinkelgebers und die entsprechende Kurbelwellenstellung erfasst. Anhand der Kurbelwellenstellung wird die entsprechende Nockenwellenstellung rechnerisch ermittelt und mit dem Messwert des Absolutwinkelgebers verglichen. Die dabei gebildete Differenz wird als Korrekturwert für diesen Messwert des Absolutwinkelgebers abgespeichert. Um den gesamten Winkelbereich abzudecken, werden auf diese Weise eine Reihe von Korrekturwerten während mindestens einer vollständigen Umdrehung der Nockenwelle ermittelt.

Bei dem in der deutschen Offenlegungsschrift 199 27 191 beschriebenen Verfahren werden der bekannt systematische Fehler und der unbekannt systematische Fehler des Absolutwinkelgebers also in einem Schritt, durch einen vorab bestimmten, messwertabhängigen Korrekturwert korrigiert. Die Güte dieser messwertabhängigen Korrekturwerte hängt wesentlich von der Genauigkeit ab, mit der sich die Kurbelwellenstellung bestimmen lässt.

Vorteile der Erfindung

Mit der vorliegenden Erfindung wird vorgeschlagen, den bekannt systematischen Fehler und den unbekannt systematischen Fehler eines Gebers unabhängig voneinander zu bestimmen und auch unabhängig voneinander zu korrigieren.

Erfindungsgemäß ist nämlich erkannt worden, dass genauere Messergebnisse erzielt werden können, wenn die Messunsicherheiten, die auf den bekannt systematischen Fehler und den unbekannt systematischen Fehler und damit auf unterschiedliche Ursachen zurückzuführen sind, abhängig von der jeweiligen Einflussgröße und Einflussart korrigiert werden. Dieser Ansatz erweist sich insbesondere deshalb als vorteilhaft, weil in der Regel nur die Korrekturwerte für den unbekannt systematischen Fehler in einem Lernvorgang adaptiert werden müssen, während die Korrekturwerte für den bekannt systematischen Fehler durch einmalige Messung oder durch Berechnung sehr genau bestimmt werden können. Demnach kann zumindest der bekannt systematische Fehler auch dann korrigiert werden, wenn der Lernvorgang zur Bestimmung der Korrekturwerte für den unbekannt systematischen Fehler noch nicht abgeschlossen ist oder gar nicht abgeschlossen werden kann.

Im Fall eines Absolutwinkelgebers zur Erfassung der Nockenwellenstellung hat sich gezeigt, dass der bekannt systematische Fehler ca. 90% des Gesamtfehlers ausmacht und drehzahlabhängig bei ca. 14° liegt, während der unbekannt systematische Fehler nur ca. 10% des Gesamtfehlers ausmacht und bei ca. 1,5° liegt. Der zufällige Fehler liegt in der Größenordnung von 0,5°. Der unbekannt systematische Fehler ist hier in der Regel auf mechanische Einflüsse zurückzuführen. Die Adaption der Korrekturwerte für den unbekannt systematischen Fehler ermöglicht eine flexible Auslegung der Anforderungen an die mechanischen Einbautoleranzen, an den Rundlauf der Welle, an die Homogenität und die Größe des Magnetfeldes und an das Sensorelement. Dadurch können Kosten bei Material, Bearbeitung und Montage eingespart werden. Da der unbekannt systematische Fehler alleine wesentlich kleiner ist als die Summe aus bekannt systematischem und unbekannt systematischem Fehler, schwingen die Korrekturwerte für den unbekannt systematischen Fehler relativ schnell ein, so dass der Lernvorgang insgesamt relativ kurz ist. Die erfindungsgemäße schrittweise Korrektur der einzelnen Fehlerarten benötigt zudem im Vergleich zu dem in der deutschen Offenlegungsschrift 199 27 191 beschriebenen Verfahren weniger Speicherplatz, da nur der bekannt systematische Fehler drehzahlabhängig ist, während der unbekannt systematische Fehler unabhängig von der Drehzahl ist. Dementsprechend müssen die Korrekturwerte für den unbekannt systematischen Fehler auch nicht drehzahlabhängig gelernt und gespeichert werden.

Grundsätzlich gibt es verschiedene Möglichkeiten für die Realisierung des erfindungsgemäßen Verfahrens, insbesondere für die Bestimmung des bekannt systematischen Fehlers und für die Bestimmung des unbekannt systematischen Fehlers. Da diese beiden Fehler erfindungsgemäß unabhängig voneinander bestimmt werden, können die unterschiedlichen Varianten der Bestimmung jedes einzelnen Fehlers beliebig miteinander kombiniert werden.

Wie bereits erwähnt, kann der bekannt systematische Fehler häufig durch einmalige Messung ermittelt werden. In diesem Fall erweist es sich als vorteilhaft, im Vorfeld des Gebereinsatzes eine messwertabhängige Kennlinie für den bekannt systematischen Fehler zu bestimmen. Danach kann dann einfach anhand der Kennlinie für jeden Messwert des Gebers ein Korrekturwert für den bekannt systematischen Fehler bestimmt werden.

Wenn der rechnerische Zusammenhang zwischen den Messwerten des Gebers und dem bekannt systematischen Fehler bekannt ist, kann der Korrekturwert für den bekannt systematischen Fehler auch für jeden Messwert aktuell berechnet werden.

Die Bestimmung des unbekannt systematischen Fehlers erfolgt in vorteilhafter Weise durch Adaption, d.h. in einem Lernvorgang, bei dem jeder Messwert des Gebers mit dem korrespondierenden Messwert mindestens eines Referenzgebers verglichen wird. An dieser Stelle sei jedoch darauf hingewiesen, dass sich auf diese Weise kein absoluter Wert für den unbekannt systematischen Fehler des Gebers bestimmen lässt, sondern nur der unbekannt systematische Fehler in Bezug auf den bzw. die Referenzgeber. Bei dem Vergleich der Messwerte des Gebers mit den korrespondierenden Messwerten des bzw. der Referenzgeber werden messwertabhängige Lernwerte ermittelt und abgespeichert, die dann der Korrektur des unbekannt systematischen Fehlers zugrunde gelegt werden.

Je nach Geber und Anwendung kann es von Vorteil sein, den Lernvorgang zur Adaption des unbekannt systematischen Fehlers so lange wie möglich fortzusetzen, beispielsweise wenn der unbekannt systematische Fehler Temperaturgänge oder Alterungseffekte umfasst. In diesem Fall werden die Lernwerte solange aktualisiert, solange Messwerte des Referenzgebers zur Verfügung stehen, also auch während des normalen Geberbetriebs. Nur wenn der Referenzgeber keine Messwerte mehr liefert, wird bei der Korrektur des unbekannt systematischen Fehlers auf die abgespeicherten Lernwerte zurückgegriffen. Eine permanente Adaption bedingt eine relativ lange Laufzeit und einen relativ hohen Speicherbedarf.

Wie bereits erwähnt, schwingen die Lernwerte für den unbekannt systematischen Fehler aber in der Regel relativ schnell ein, so dass der Lernvorgang abgeschlossen werden kann. In diesem Fall werden die Lernwerte nur bis zum Abschluss des Lernvorgangs aktualisiert. Danach wird der unbekannt systematische Fehler unter Zugrundelegung des Lernwerts korrigiert, der mit Abschluss des Lernvorgangs abgespeichert worden ist.

In einer vorteilhaften Variante der Adaption des unbekannt systematischen Fehlers wird nicht nur der aktuelle Lernwert bestimmt, sondern auch dessen Güte. Dazu wird die Differenz zwischen dem aktuell bestimmten Lernwert und dem entsprechenden, zuletzt abgespeicherten Lernwert gebildet und mit einer vorgegebenen Schwelle verglichen. Das Ergebnis dieses Vergleichs kann als Kriterium dafür herangezogen werden, ob der Lernvorgang abgeschlossen ist. Wenn bei jeder Messung ein Lernwert bestimmt wird, kann durch Differenzbildung mit dem entsprechenden abgespeicherten Lernwert auch eine Aussage über die Güte des korrigierten Gebersignals gemacht werden und entschieden werden, ob der Lernvorgang ggf. wieder aufgenommen werden muss. Die Durchführung einer Signaturanalyse hat sich als eine geeignete Möglichkeit zum Vergleich der Differenz zwischen dem aktuell bestimmten Lernwert und dem entsprechenden abgespeicherten Lernwert mit der vorgegebenen Schwelle erwiesen.

Zeichnungen

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnungen verwiesen.

Fig. 1 zeigt ein Flussdiagramm für ein Verfahren zur Korrektur des Messfehlers eines Absolutwinkelgebers zur Bestimmung der Nockenwellenstellung einer Brennkraftmaschine,

Fig. 2 zeigt eine Stützstellenverteilung mit entsprechenden Lernwerten und einer daraus ermittelten Korrekturkennlinie für den unbekannt systematischen Fehler, und

Fig. 3 dient der Veranschaulichung eines Gewichtungsverfahrens für die Lernwerte.

Beschreibung des Ausführungsbeispiels

Das erfindungsgemäße Verfahren zur Korrektur des Messfehlers eines Gebers wird nachfolgend am Beispiel eines Absolutwinkelgebers näher erläutert, mit dem die Nockenwellenstellung einer Brennkraftmaschine bestimmt werden soll.

Das erfindungsgemäße Verfahren geht von der Annahme aus, dass sich der Messwert des Absolutwinkelgebers aus dem wahren Wert, einem bekannt systematischen Fehler, einem unbekannt systematischen Fehler und einem zufälligen Fehler zusammensetzt. Erfindungsgemäß werden der bekannt systematische Fehler und der unbekannt systematische Fehler unabhängig voneinander bestimmt und auch unabhängig voneinander korrigiert.

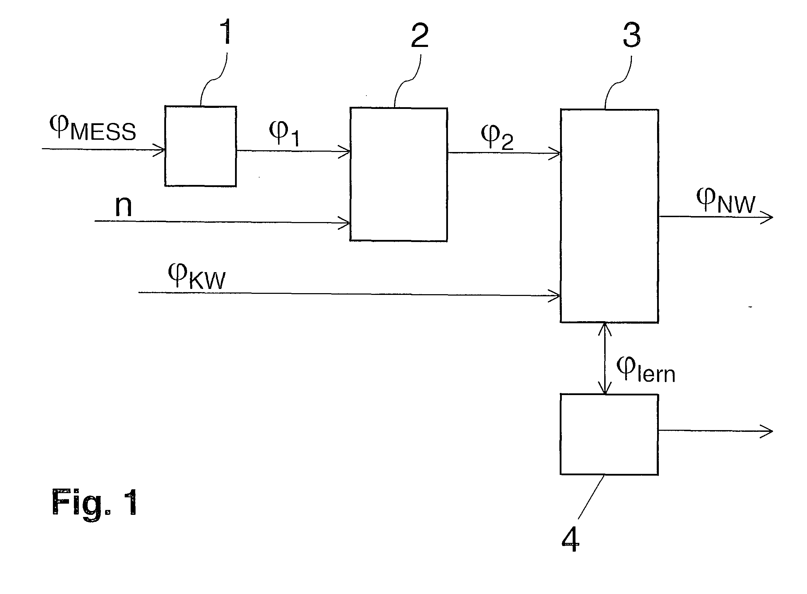

Die Korrektur erfolgt im hier beschriebenen Ausführungsbeispiel schrittweise, was durch Fig. 1 veranschaulicht wird. Das Ausgangssignal $\varphi_{Mess}$ des Absolutwinkelgebers wird zunächst einem Block 1 zugeführt, der auch als "Korrektur Einbauoffset" bezeichnet wird. Hier wird eine Verschiebung zwischen der Referenzposition des Motors und dem Nullpunkt des Absolutwinkelgebers korrigiert. Diese Korrektur kann nötig werden, falls aus konstruktiven Gründen nur bestimmte Einbaulagen des Absolutwinkelgebers realisiert werden können oder der Absolutwinkelgeber so montiert werden muss, dass sein Nullpunkt nicht mit einer bevorzugten Motorabstellung identisch ist. Der Einbauoffset kann im Rahmen des erfindungsgemäßen Verfahrens als Teil des bekannt systematischen Fehlers betrachtet werden, der gesondert korrigiert wird, da hierfür lediglich eine drehzahlunabhängige Korrekturgröße erforderlich ist.

Das Ausgangssignal $\varphi_1$ von Block 1 wird dann einem Block 2 - "Korrektur bekannt systematischer Fehler" - zugeführt. Hier wird die Korrektur des bekannt systematischen Winkelfehlers vorgenommen. Da der bekannt systematische Winkelfehler drehzahlabhängig ist, wird dem Block 2 außerdem ein Drehzahlsignal n zugeführt. Der bekannt systematische Winkelfehlers $\varphi_{delay}$ entsteht im Wesentlichen aus den Signallaufzeiten $t_{delay}$ und kann bestimmt werden als:

$$\varphi_{delay} = \omega \cdot t_{delay}$$

$$\varphi_{delay} = 2\pi \cdot n \cdot t_{delay}$$

$$\varphi_{delay} = 360 \cdot n \cdot t_{delay}$$

Das Ausgangssignal $\varphi_2$ von Block 2 ergibt sich dann als:

$$\varphi_2 = \varphi_1 + \varphi_{delay}$$

Der Einbauoffset und der bekannt systematische Fehler machen ca. 90% des Gesamtfehlers aus. Das um diesen Fehleranteil bereinigte Ausgangssignal $\varphi_2$ von Block 2 wird dann einem Block 3 - "Korrektur unbekannt systematischer Fehler" - zugeführt. Hier wird die Korrektur des unbekannt systematischen Fehlers vorgenommen, der nur noch ca. 10% des Gesamtfehlers ausmacht und im Wesentlichen durch Anbau- und Montagetoleranzen des Absolutwinkelgebers verursacht wird. Eine genauere Bestimmung dieser Toleranzen bzw. des dadurch bedingten Winkelfehlers während der Montage wäre sehr aufwendig und ist daher wirtschaftlich nicht sinnvoll. Auch Temperatureffekte und Alterungseffekte können sich im unbekannt systematischen Fehler niederschlagen. Anhand einer geeigneten Referenzgröße kann der unbekannt systematische Fehler in einem Lernvorgang adaptiert werden. Die Referenzgröße sollte die absolute Motorposition möglichst genau wiedergeben, da sich der Winkelfehler des Absolutwinkelgebers mit Hilfe einer derartigen Adaption nur in Bezug auf die Referenzgröße und nicht in Bezug auf die eigentlich relevante absolute Motorposition kompensieren lässt.

Als Referenzgröße zur Adaption des unbekannt systematischen Fehlers des Absolutwinkelgebers dient bei der hier beschriebenen Anwendung die parallel zur Nockenwellenstellung erfasste Kurbelwellenstellung $\varphi_{KW}$. Der Winkelwert der Kurbelwellenstellung ist konstruktionsbedingt proportional zum Winkelwert der Nockenwellenstellung. Die Lernwerte $\varphi_{lern}$ für den un-

bekannt systematischen Fehler werden jeweils durch Vergleich eines Messwerts des Absolutwinkelgebers $\varphi_{Mess}$ bzw. des Ausgangssignals $\varphi_2$ von Block 2 mit der parallel ermittelten Kurbelwellenstellung $\varphi_{KW}$ bestimmt als

$$\varphi_{lern}(\varphi_{Mess}) = \varphi_2 - \varphi_{KW}/2.$$

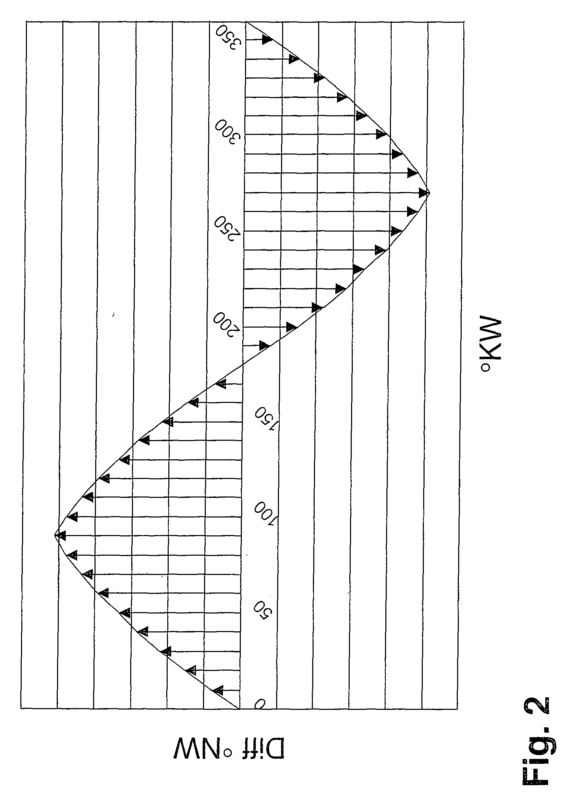

Die Adaption des unbekannt systematischen Fehlers wird durch Fig. 2 veranschaulicht. Das Signal des Absolutwinkelgebers wird hier beispielhaft durch eine sinusähnliche Schwingung beeinflusst. Da es in der Regel nicht möglich ist, das Ausgangssignal des Absolutwinkelgebers kontinuierlich mit der Kurbelwellenstellung zu vergleichen, werden nur an bestimmten Stützstellen, d.h. für bestimmte Winkelstellungen, und zu bestimmten Zeitpunkten Lernwerte bestimmt. Im hier beschriebenen Ausführungsbeispiel, das den Fall eines 6-Zylinder-Motors darstellt, werden im winkelsynchronen sogenannten Synchro-Raster während einer Umdrehung an sechs Synchro-Punkten, nämlich bei 0°, 60°, 120°, 180°, 240° und 300°, Winkelwerte gemessen und damit Winkelfehler ermittelt. Im zeitsynchronen Raster, z.B. 100ms, ergeben sich bei unterschiedlichen Drehzahlen unterschiedliche Winkelwerte, da die Zeitschrittweiten konstant sind. Durch diese "drehzahlabhängige Verschiebung des Messpunktes" können Winkelfehler zwischen den Synchro-Punkten gelernt werden. Auf diese Weise wird eine Korrekturkennlinie für den gesamten Winkelbereich von 0° bis 360° ermittelt und bezüglich der Messwerte des Absolutwinkelgebers abgespeichert, so dass der unbekannt systematische Fehler nach Abschluss des Lernvorgangs bei jedem beliebigen Messwert des Absolutwinkelgebers kompensiert werden kann. Die Stützstellen sind hier im Abstand von 10° über den gesamten Winkelbereich von 0° bis 360° verteilt. Fig. 2 gibt die Stützstellenaufteilung des Winkelbereichs mit den entsprechenden Lernwerten und der Korrekturkennlinie wieder.

Da die wichtigsten Steuergerätefunktionen auf dem durch die Motorfunktionen bestimmten Synchro-Raster aufbauen, werden vorteilhafter Weise an den Synchro-Punkten Stützstellen positioniert. Außerdem erweist es sich als vorteilhaft, Lernwerte möglichst nur für die einmal bestimmten Stützstellen zu ermitteln, da die Zuordnung der Lernwerte zu den einzelnen Stützstellen in diesem Fall eindeutig ist und auch auf eine etwaige Gewichtung der Lernwerte verzichtet werden kann. Mit einer derartigen Stützstellenverteilung kann Rechenzeit gespart werden, die im laufzeitkritischen Synchro-Raster besonders wertvoll ist.

Wie bereits erwähnt, können die im Zeitraster erfassten Messwerte des Absolutwinkelgebers je nach Drehzahl einer beliebigen Winkelposition entsprechen und also auch zwischen zwei Stützstellen liegen. In einer Variante des stützstellenbezogenen Lernvorgangs wird der Bereich zwischen zwei Stützstellen einfach einer dieser beiden Stützstellen zugeordnet. D.h., jeder für diesen Bereich bestimmte Lernwert wird dieser einen Stützstelle zugeordnet. Die andere Stützstelle wird dabei nicht berücksichtigt, auch wenn der entsprechende Messwert näher an der anderen Stützstelle liegt.

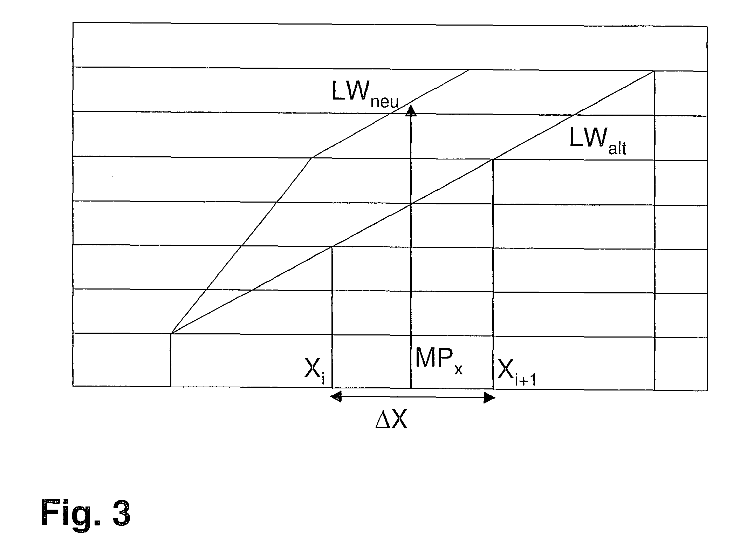

Fig. 3 veranschaulicht eine andere Möglichkeit des stützstellenbezogenen Lernvorgangs. Bei dieser Variante wird der Lernwert LW für einen Messwert $MP_x$, der zwischen zwei Stützstellen $x_i$ und $x_{i+1}$ liegt, beiden Stützstellen zugeordnet, wobei allerdings jeweils der Abstand zwischen Messwert $MP_x$ und Stützstelle $x_i$ bzw. $x_{i+1}$ berücksichtigt wird. In diesem Fall wird aus dem Betrag des Abstands bestimmt, mit welcher Gewichtung die jeweilige Stützstelle gelernt wird. Rechnerisch basiert dieses Verfahren auf dem Ansatz:

$$LW(x_i) = LW(x_i)_{alt} + ((x_{i+1} - MP_x)/\Delta x)\, LW_{neu}$$

$$LW(x_{i+1}) = LW(x_{i+1})_{alt} + ((MP_x - x_i)/\Delta x)\, LW_{neu}$$

Bei Anwendung dieses Verfahrens auf im Zeitraster erfasste Messwerte verkürzt sich die Einschwingdauer der Lernwerte, da zwei Stützstellen parallel gelernt werden. Außerdem verringert sich die Wahrscheinlichkeit für sogenannte Adaptionslöcher, wie Stützstellen bezeichnet werden, für die keine Lernwerte ermittelt werden.

Das Ausgangssignal von Block 3 wird bestimmt als

$$\varphi_{NW} = \varphi_2 - \varphi_{lern},$$

wobei $\varphi_{NW}$ den um den Einbauoffset, den bekannt systematischen Fehler und den unbekannt systematischen Fehler bereinigten Messwert des Absolutwinkelgebers darstellt.

Das in Fig. 1 dargestellte Flussdiagramm umfasst schließlich auch noch einen Block 4 - "Freigabe der Adaption". Hier werden die während des Lernvorgangs ermittelten Lernwerte fortlaufend mit einer applizierbaren Schwelle verglichen, um das Einschwingen der Lernwerte zu überwachen und, insbesondere nach Abschluss des Lernvorgangs, Informationen über die Signalgüte des korrigierten Absolutwinkelgebersignals zu gewinnen. Dazu wird die Differenz zwischen dem aktuell für eine Stützstelle bestimmten Lernwert und dem für diese Stützstelle abgespeicherten Lernwert gebildet und durch Signaturanalyse geprüft, ob diese Differenz eine applizierbare Schwelle unterschreitet. Bejahenden Falls wird angenommen, dass der Lernvorgang für diese Stützstelle beendet ist. Die Signaturanalyse ist in ein sehr langsames Zeitraster von beispielsweise 1000 ms eingebunden. Dadurch kann wertvolle Rechenzeit in den Synchro-/ Zeit-Rastern eingespart werden, ohne dass funktionale Einschränkungen im Motorbetrieb entstehen. Wenn der Lernvorgang für alle Stützstellen abgeschlossen ist, wird eine Bitgröße auf "true" gesetzt. Die kontinuierliche Überwachung der Lernwerte wird dann fortgesetzt, um Informationen über die Signalgüte des korrigierten Absolutwinkelgebersignals zur Verfügung zu stellen. Diese Informationen können z.B. genutzt werden, um von einer 2-Punkt auf eine kontinuierliche Nockenwellenverstellung umzuschalten, die einen genaueren Winkelwert benötigt. Außerdem kann so sichergestellt werden, dass die Bitgröße "true" bei Verfälschung der Lernwerte durch widrige äußere Einflüsse zurückgesetzt wird und der Lernvorgang wieder aufgenommen bzw. fortgesetzt wird.

Der in Verbindung mit den Figuren beschriebenen Verfahrensvariante liegt der erfindungsgemäße Gedanke zugrunde, die Messunsicherheiten des Absolutwinkelgebers nach den Fehlerarten, bekannt systematischer Fehler, unbekannt systematischer Fehler und zufälliger Fehler, zu gruppieren und die Korrektur schrittweise und gesondert für den bekannt systematischen Fehler und den unbekannt systematischen Fehler vorzunehmen. Durch diese Strukturierung der Funktionalität erhöht sich die Übersichtlichkeit des Verfahrens insgesamt. Mit der voranstehend beschriebenen Verfahrensvariante kann das Absolutwinkelgebersignal zu jedem beliebigen Zeitpunkt korrigiert werden. Dadurch können Informationen bezüglich der Nockenwellenstellung nicht nur im Synchro-Raster sondern auch in jedem beliebigen Zeitraster abgefragt werden. Außerdem können mit Hilfe der hier in Rede stehenden Verfahrensvariante auch Informationen über die Signalgüte des korrigierten Absolutwinkelgebersignals gewonnen und zur Verfügung gestellt werden. Dementsprechend umfasst diese Verfahrensvariante folgende Hauptfunktionalitäten:

- Korrektur des bekannt systematischen Fehlers
- Korrektur des unbekannt systematischen Fehlers mittels Adaption
- "Quasi kontinuierliche" Korrektur der Messunsicherheiten
- Freigabe des korrigierten Absolutwinkelgebersignals.

**Patentansprüche**

1. Verfahren zur Korrektur des Messfehlers eines Gebers, wobei sich der Messfehler aus einem bekannt systematischen Fehler, einem unbekannt systematischen Fehler und einem zufälligen Fehler zusammensetzt, **dadurch gekennzeichnet, dass** der bekannt systematische Fehler und der unbekannt systematische Fehler unabhängig voneinander bestimmt und korrigiert werden.

2. Verfahren nach Anspruch 1, **dadurch gekennzeichnet, dass** vorab mindestens eine messwertabhängige Kennlinie für den bekannt systematischen Fehler bestimmt und abgespeichert wird und dass für jeden Messwert des Gebers anhand der Kennlinie ein Korrekturwert für den bekannt systematischen Fehler bestimmt wird.

3. Verfahren nach Anspruch 1, **dadurch gekennzeichnet, dass** für jeden Messwert des Gebers ein Korrekturwert für den bekannt systematischen Fehler berechnet wird.

4. Verfahren nach einem der Ansprüche 1 bis 3, **dadurch gekennzeichnet, dass** für jeden Messwert des Gebers ein Lernwert für den unbekannt systematischen Fehler durch Vergleich des Messwerts des Gebers mit dem korrespondierenden Messwert mindestens eines Referenzgebers bestimmt wird und dass der unbekannt systematische Fehler unter Zugrundelegung des so bestimmten Lernwerts korrigiert wird.

5. Verfahren nach Anspruch 4, **dadurch gekennzeichnet, dass** die Lernwerte messwertabhängig abgespeichert werden und solange aktualisiert werden, solange Messwerte des Referenzgebers zur Verfügung stehen, und dass der unbekannt systematische Fehler unter Zugrundelegung des für den jeweiligen Messwert abgespeicherten Lernwerts korrigiert wird, wenn kein entsprechender Messwert des Referenzgebers zur Verfügung steht.

6. Verfahren nach einem der Ansprüche 4 oder 5, **dadurch gekennzeichnet, dass** der Lernwert für jeden Messwert abgespeichert und aktualisiert wird, bis der Lernvorgang zur Bestimmung des unbekannt systematischen Fehlers abgeschlossen ist, und dass der unbekannt systematische Fehler danach unter Zugrundelegung des Lernwerts korrigiert wird, der mit Abschluss des Lernvorgangs abgespeichert worden ist.

7. Verfahren nach Anspruch 6, **dadurch gekennzeichnet, dass** die Differenz zwischen dem aktuell bestimmten Lernwert und dem entsprechenden abgespeicherten Lernwert gebildet wird und mit einer vorgegebenen Schwelle verglichen wird, um die Güte des aktuell bestimmten Lernwerts zu bestimmen und/oder um zu überprüfen, ob der Lernvorgang abgeschlossen ist.

8. Verfahren nach Anspruch 7, **dadurch gekennzeichnet, dass** zum Vergleich der Differenz zwischen dem aktuell bestimmten Lernwert und dem entsprechenden abgespeicherten Lernwert mit der vorgegebenen Schwelle eine Signaturanalyse durchgeführt wird.

9. Verfahren zur Korrektur des Messfehlers eines Absolutwinkelgebers zur Bestimmung der Nockenwellenstellung einer Brennkraftmaschine, nach einem der Ansprüche 1 bis 8, **dadurch gekennzeichnet, dass** der Korrekturwert für den bekannt systematischen Fehler eines Messwerts in Abhängigkeit von der jeweiligen Motordrehzahl bestimmt wird.

10. Verfahren zur Korrektur des Messfehlers eines Absolutwinkelgebers zur Bestimmung der Nockenwellenstellung einer Brennkraftmaschine, nach einem der Ansprüche 1 bis 9, **dadurch gekennzeichnet, dass** der Korrekturwert für den bekannt systematischen Fehler eines Messwerts in Abhängigkeit von der Signallaufzeit des Absolutwinkelgebers und/ oder der A/D-Wandlungsrate und/oder dem Zeitraster des $\mu$Cs bestimmt wird.

11. Verfahren zur Korrektur des Messfehlers eines Absolutwinkelgebers zur Bestimmung der Nockenwellenstellung einer Brennkraftmaschine, nach einem der Ansprüche 4 bis 10, **dadurch gekennzeichnet, dass** die Lernwerte für den unbekannt systematischen Fehler jeweils durch Vergleich eines Messwerts des Absolutwinkelgebers mit der parallel ermittelten Kurbelwellenstellung bestimmt werden.

12. Verfahren nach Anspruch 11, **dadurch gekennzeichnet, dass** Lernwerte für den unbekannt systematischen Fehler in einem Stützstellenraster bestimmt werden und dass Lernwerte, die für einen Messwert zwischen zwei Stützstellen bestimmt werden, entsprechend ihren Abständen zu den benachbarten Stützstellen gewichtet werden und den benachbarten Stützstellen zugeordnet werden.

13. Verfahren nach einem der Ansprüche 11 oder 12, **dadurch gekennzeichnet, dass** Lernwerte für den unbekannt systematischen Fehler im winkelsynchronen Raster bestimmt werden.

14. Verfahren nach einem der Ansprüche 11 bis 13, **dadurch gekennzeichnet, dass** Lernwerte für den unbekannt systematischen Fehler im zeitsynchronen Raster bestimmt werden.

15. Verfahren nach einem der Ansprüche 10 bis 13, **dadurch gekennzeichnet, dass** auf der Grundlage der bestimmten und ggf. gewichteten Lernwerte eine Kennlinie zur Korrektur des unbekannt systematischen Fehlers für den gesamten Winkelbereich ermittelt wird.

Fig. 1

**Fig. 2**

Fig. 3